# EUROPEAN PATENT APPLICATION

(11) **EP 1 057 690 A2**
(43) Date of publication of application: **06.12.2000**
(21) Application number: 00111562.5
(22) Date of filing: 30.05.2000
(51) Int. Cl.: B60N 2/64

(54) **Seat back frame for automotive vehicles**

(30) Priority: 31.05.1999 JP 15119199
(71) Applicant: Ikeda Bussan Co., Ltd., Ayase-shi, Kanagawa 252-1121 (JP)
(72) Inventor: Amano, Akira, c/o Ikeda Bussan Co., Ltd., Ayase-shi, Kanagawa 252-1121 (JP)
(74) Representative: Grünecker, Kinkeldey, Stockmair & Schwanhäusser Anwaltssozietät

(57) **Abstract**

To produce a rectangular frame of automotive seat back, an upper frame, two side frames and a lower frame are used. Each of the side frames extends downward from one end of the upper frame. Two collared flanges are fixed to lower portions of the two side frames respectively in such a manner that respective holes of the collared flanges face each other. Both ends of the lower frame are received in the respective holes of the collared flanges. The ends of the lower frame are welded to the collared flanges. Due to provision of the collared flanges, the lower frame can be readily connected to the side frames without requiring the length of the lower frame to be precise.

## Description

### BACKGROUND OF THE INVENTION

### 1. Field of the Invention

The present invention relates to seat back frames of automotive seats, and more specifically, to rectangular seat back frames which generally comprise an upper frame, two side frames, and a lower frame. More specifically, the present invention relates to the seat back frames of a type wherein the lower frame can be readily connected to the side frames without requiring the length of the lower frame to be precise.

### 2. Description of the Prior Art

Conventional vehicle seat backs use rectangular pipe frames and panel frames comprising bent pipe. In case of the pipe frame, springs are stretched across the frame and padding and a cover are spread over the springs. Furthermore, hinged metal fittings for arm rests and a reclining device are welded to the pipe frames of the vehicle seat backs.

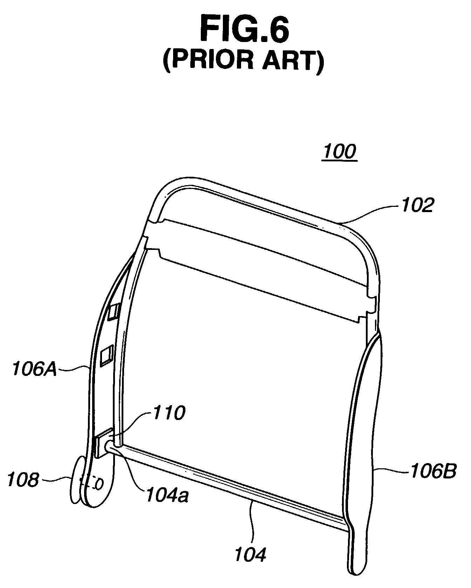

Fig. 6 shows a conventional rectangular frame 100 of an automotive seat back. The seat back frame 100 is constructed of a metal pipe and comprises a reversed U-shaped upper pipe 102 and a lower straight pipe 104. As shown, lower ends of the reversed U-shaped upper pipe 102 are welded to opposing end portions of the lower straight pipe 104. Elongate side metal panels 106A and 106B are secured to side portions of the U-shaped upper pipe 102. The side panel 106A is equipped at a lower end thereof with a locking mechanism 108 of a reclining device by which the seat back can be locked to a seat portion (not shown) at a desired angle.

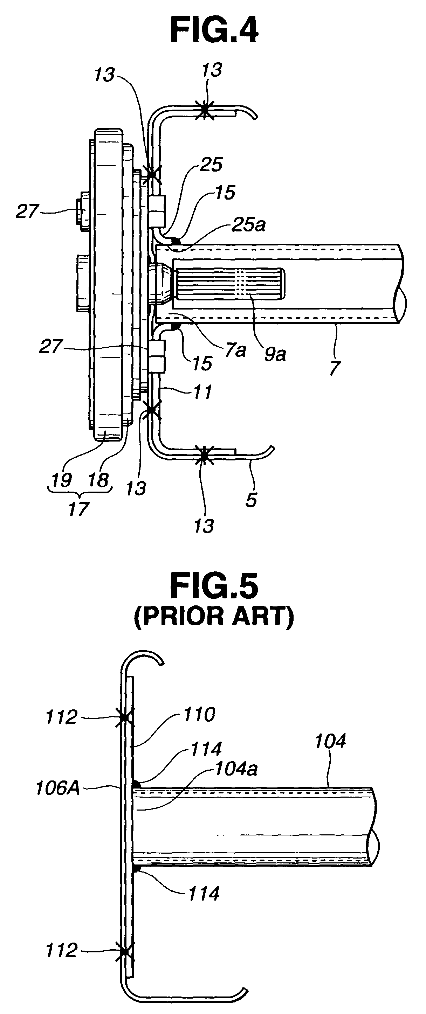

As is seen from Fig. 5, each end 104a of the lower straight pipe 104 is connected to the corresponding side panel 106A or 106B with the aid of a reinforcing plate 110 disposed therebetween. That is, the reinforcing plate 110 is welded to the inner surface of the side panel 106A or 106B at portions 112, and the end 104a of the lower straight pipe 104 is welded to the reinforcing plate 110 around a circular end portion 114.

However, due to inherent construction, the above-mentioned conventional rectangular frame 100 has the following drawbacks.

First, it is very difficult or at least troublesome to properly connect the lower straight pipe 104 to the side panels 106A and 106B. In fact, if the length of the lower straight pipe 104 is not precise, it often occurs that a gap is produced between the end 104a of the lower straight pipe 104 and the reinforcing plate 110, which makes the welding therebetween difficult and poor.

Second, during the welding, it is necessary to hold the lower straight pipe 104 in the right position by one hand or a suitable tool. This is troublesome and thus lowers the productivity of the seat.

Third, the seat back frame 100 fails to have a mechanical strength sufficient for overcoming a stress applied thereto upon a vehicle collision of the like. In fact, upon a vehicle collision, a great stress is applied to the seat back frame 100, and thus, if the mechanical strength of the frame 100 is poor, deformation of the seat back occurs.

### SUMMARY OF THE INVENTION

Thus, an object of the present invention is to provide a seat back frame which is free of the above-mentioned drawbacks.

Another object of the present invention is to provide a seat back frame for a vehicle seat having side panels fixed to side portions of the seat back frame, which is economical, and easily assembled.

Still another object of the present invention is to provide such a seat back frame which improves the productivity without requiring the length of the lower straight member to be precise.

A further object of the present invention is to provide such a seat back frame which improves static rigidity and torsional rigidity to cope with rear-end and broadside vehicle collisions.

According to the present invention, there is provided an economical seat back frame. The productivity of the seat back frame can be improved without requiring the length of the lower frame to be precise, static rigidity and torsional rigidity of the seat back frame can be improved to cope with rear-end and broadside collisions, and assembly of the seat back frame and the reclining device can be done with ease and quickly.

According to a first aspect of the present invention, there is provided a rectangular frame of automotive seat back, which comprises an upper frame; two side frames each extending downward from one end of the upper frame; two collared flanges connected to lower portions of the two side frames respectively in such a manner that respective holes of the collared flanges face each other; a lower frame having both ends received in the respective holes of the collared flanges; and a welding material by which the ends of the lower frame are welded to the collared flanges.

According to a second aspect of the present invention, there is provided a rectangular frame of automotive seat back, which comprises an upper metal frame; two side metal frames each extending downward from one end of the upper metal frame; two reinforcing metal plates welded to the side metal frames respectively; two collared flanges integrally provided by the reinforcing metal plates, the collared flanges being arranged in such a manner that respective holes of the collared flanges face each other, each of the holes being burred; a lower frame constructed of a metal pipe, the lower frame having both ends telescopically received in the respective holes of the collared flanges; and a welding material by which the ends of the lower frame are welded to the collared flanges.

### BRIEF DESCRIPTION OF THE DRAWINGS

Other objects and advantages of the present invention will become apparent from the following description when taken in conjunction with the accompanying drawings, in which:
Fig. 1 is a perspective view of a seat back frame which is a first embodiment of the present invention;
Fig. 2 is a sectional view of a portion of the first embodiment where a lower straight member is welded to a side frame;
Fig. 3 is a sectional view similar to Fig. 2, but showing a second embodiment of the invention, wherein a reclining device is employed;
Fig. 4 is a sectional view also similar to Fig. 2, but showing a third embodiment of the present invention, wherein a reclining device is employed;
Fig. 5 is a sectional view also similar to Fig. 2, but showing a conventional seat back frame; and
Fig. 6 is a perspective view of the conventional seat back frame.

### DETAILED DESCRIPTION OF THE INVENTION

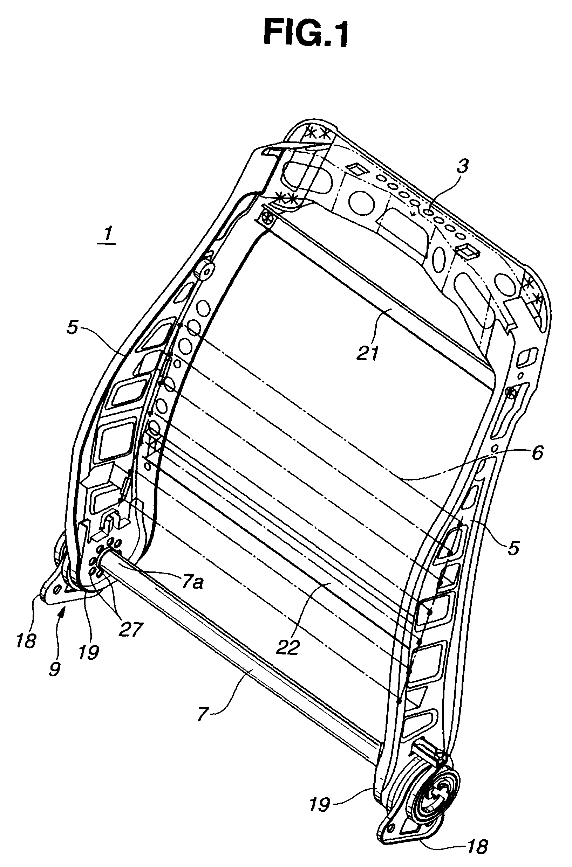

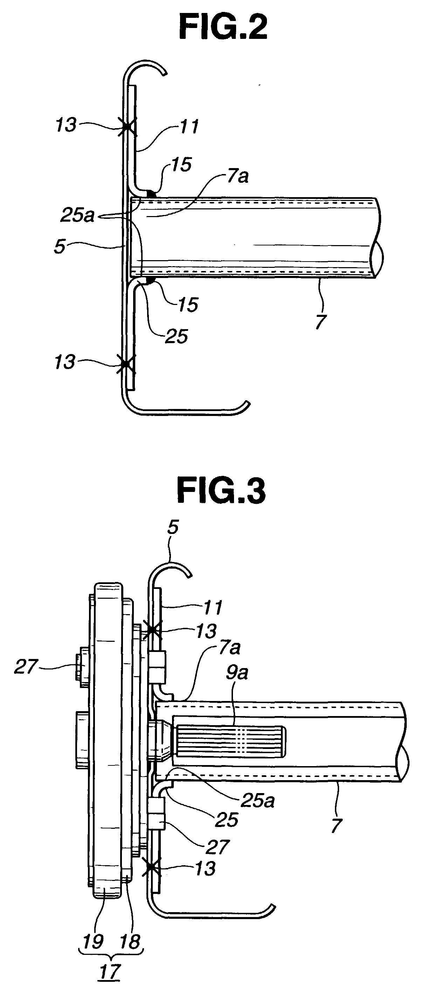

Referring to Figs. 1 and 2, particularly Fig. 1, there is shown a seat back frame (1) which is a first embodiment of the present invention.

As shown in Fig. 1, the rectangular seat back frame (1) comprises an upper metal frame (3), two side metal frames (5) and a lower frame (7). The side metal frames (5) have upper ends welded to opposing ends of the upper metal frame (3). The lower frame (7) is a metal pipe member. Moreover, an upper cross brace (21) and a lower cross brace (22) are provided between the two side frames (5). Springs (6) extend between the side metal frames (5). As shown, each side metal frame (5) has an enlarged lower portion.

As is seen from Fig. 2, a reinforcing metal plate (11) is welded at portions 13 to the inner surface of the lower portion of each side metal frame (5). The reinforcing metal plate (11) is formed with a collared flange portion (25) having a burred hole (25a). The collared flange portions (25) welded to the two side metal frames (5) are oriented to face each other. Opposing ends (7a) of the lower frame (7) are received in the burred holes (25a) of the collared flange portions (25) and welded thereto.

If desired, the reinforcing plate (11) may be omitted. But in this case, the lower ends of the side frames (5) should be formed thick, and the collared flange portion (25) should be formed at the thick portion.

That is, in the illustrated embodiment, each end (7a) of the lower frame (7) is press fitted in the burred hole (25a) of the collared flange portion (25), and the end (7a) of the lower frame (7) is entirely welded to the end of the collared flange portion (25).

It is to be noted that due to provision of the collared flange portions (25) at both side frames (5), the lower frame (7) can be readily connected to the side frames (5) without requiring the length of the lower frame (7) to be precise. That is, before the process of welding, the opposing ends of the lower frame (7) are put into the burred holes (25a) of the collared flange portions (25). Due to the telescopic connection between the lower frame (7) and the flange portions (25), a certain error in length of the lower frame (7) can be absorbed by the telescopic connection. This improves the productivity of the seat back frame (1).

As is seen in Fig. 1, the lower portion of each side frame (5) is wide enough to attach thereto a reclining device (17) which can be attached to either side frame (5). The side frames (5) can be channel-shaped or L-shaped.

The reclining device (17) generally comprises a base (18) which is fixed to the seat portion, an arm (19) which is pivotally connected to the base (18) and fixed to the side frame (5), and a return spring (no numeral) which biases the arm (19) in a direction to raise the seat back to an upright position. Upon returning to the upright position, a locking mechanism (9) locks the seat back at such an upright position. The base (18), the arm (19) and the return spring are housed in a case which is fixed to the side frame (5) by means of bolts and nuts (27).

Fig. 3 shows a second embodiment of the present invention, which employs a reclining device (17) attached to the side frame (5) by bolts and nuts (27). As is seen from this drawing, in this embodiment, a center shaft (9a) of the locking mechanism (9) is coaxial with the lower frame (7) and spacedly received in the interior of the lower frame (7). The construction of the reclining device (17) is the same as that of the above-mentioned reclining device (17) of Fig. 1.

Referring back to Fig. 1, the space between the lower frame (7) and the lower cross brace (22) is, for example, 1/3 the space between the lower frame (7) and the upper frame (3). In the illustrated embodiment, the space is about 140mm, at which extent the deformation of the seat back frame (1) can be effectively reduced upon application of horizontal or rear load, and the crosswise and lengthwise rigidity can be improved. It has been revealed that when the space is smaller than 1/3, the torsional rigidity lowers, and when the space is greater than 1/3, the torsional rigidity of the seat back frame (1) lowers.

Fig. 4 shows a third embodiment of the present invention. In this embodiment, the side frame (5) and the reinforcing plate (11) welded together are constructed to have a channel-shaped structure. Due to the channel-shaped structure, the mechanical strength of the seat back frame of this third embodiment is much increased.

In the following, advantages of the present invention will be described.

One panel frame is formed when the upper frame (3) and side frames (5) are combined, a collared flange portion (25) is formed at the lower end of each side frame (5) facing the lower frame (7), the end (7a) of the lower frame (7) is fixed in the collared flange portion (25), and the end of the collared flange portion (25) and the end (7a) of the lower frame (7) are welded together. Due to provision of the collared flange portions (25) at both side frames (5), the lower frame (7) can be easily connected or assembled to the side frames (5) without requiring the length of the lower frame (7) to be precise. This improves the productivity of the seat back frame (1). Furthermore, static rigidity and torsional rigidity of the seat back frame (1) are improved to cope with rear-end and broadside collisions.

The collared flange portions (25) are provided at side frames (5) in such a manner that the burred holes (25a) thereof face toward each other. For connecting the lower frame (7) to the side frames (5), opposing ends of the lower frame (7) are telescopically put into the burred holes (25a) and welding is applied to them. Therefore, a certain error in length of the lower frame (7) can be absorbed by the telescopic connection. This improves the productivity of the seat back frame (1).

Thus a very economical seat back frame (1) is obtained because the productivity is improved without requiring the length of the lower frame (7) to be precise, static rigidity and torsional rigidity are improved to cope with rear-end and broadside collisions, assembly of the seat back frame (1) and the reclining device (17) is done easily and quickly.

The entire contents of Japanese Patent Application 11-151191 (filed May 31, 1999) are incorporated herein by reference.

Although the invention has been described above with reference to one embodiment of the invention, the invention is not limited to such an embodiment as described above. Various modifications and variations of such an embodiment may be carried out by those skilled in the art, in light of the above descriptions.

## Claims

1. A rectangular frame of automotive seat back, comprising:
an upper frame;
two side frames each extending downward from one end of said upper frame;
two collared flanges connected to lower portions of said two side frames respectively in such a manner that respective holes of said collared flanges face each other;
a lower frame having both ends received in the respective holes of said collared flanges; and
a welding material by which the ends of the lower frame are welded to the collared flanges.

2. A rectangular frame as claimed in Claim 1, in which each of said collared flanges is integrally formed on a reinforcing plate which is welded to corresponding one of said side flames.

3. A rectangular frame as claimed in Claim 1, in which each of said holes of said collared flanges is burred.

4. A rectangular frame as claimed in Claim 1, in which said lower frame is made of a metal pipe.

5. A rectangular frame as claimed in Claim 1, further comprising cross braces which are provided between the two side frames.

6. A rectangular frame of automotive seat back, comprising:
an upper metal frame;
two side metal frames each extending downward from one end of said upper metal frame;
two reinforcing metal plates welded to the side metal frames respectively;
two collared flanges integrally provided by said reinforcing metal plates, said collared flanges being arranged in such a manner that respective holes of said collared flanges face each other, each of said holes being burred;
a lower frame constructed of a metal pipe, said lower frame having both ends telescopically received in the respective holes of said collared flanges; and
a welding material by which the ends of the lower frame are welded to the collared flanges.
